# EUROPEAN PATENT APPLICATION

(11) **EP 4 503 175 A1**
(43) Date of publication of application: **05.02.2025**
(21) Application number: 23774548.4
(22) Date of filing: 08.03.2023
(51) Int. Cl.: H01M 4/134, H01M 4/133, H01M 4/36, H01M 4/38, H01M 4/485, H01M 4/587

(54) **NEGATIVE ELECTRODE FOR NON-AQUEOUS ELECTROLYTE SECONDARY BATTERY, AND NON-AQUEOUS ELECTROLYTE SECONDARY BATTERY**

(30) Priority: 25.03.2022 JP 2022050391
(71) Applicant: Panasonic Intellectual Property Management Co., Ltd., Osaka-shi, Osaka 540-6207 (JP)
(72) Inventor: SHIRANE, Takayuki, Kadoma-shi, Osaka 571-0057 (JP); KONISHI, Atsushi, Kadoma-shi, Osaka 571-0057 (JP); SUZUKI, Hirotetsu, Kadoma-shi, Osaka 571-0057 (JP)
(74) Representative: Novagraaf International SA
(86) International application number: PCT/JP2023/008861
(87) International publication number: WO 2023/181949

(57) **Abstract**

A negative electrode for a nonaqueous electrolyte secondary battery. The negative electrode has a negative electrode mixture layer containing a negative electrode active material. The negative electrode active material includes a first material containing silicon and a second material having a reaction potential with Li higher than silicon. The content Cs of the silicon in the negative electrode mixture layer is 10 mass% or more.

## Description

### [Technical Field]

The present invention mainly relates to a negative electrode for a nonaqueous electrolyte secondary battery.

### [Background Art]

Nonaqueous electrolyte secondary batteries, especially lithium-ion secondary batteries, because of their high voltage and high energy density, have been expected as power sources for small consumer applications, power storage devices, and electric cars. With increasing demand for higher battery energy density, a material containing silicon that forms an alloy with lithium has been expected to be utilized as a negative electrode active material having a high theoretical capacity density.

For example, Patent Literature 1, related to a production method of a negative electrode material for a lithium-ion secondary battery, including steps of preparing base particles composed of a silicon atom-containing material, and forming coated particle by coating the surfaces of the base particles with carbon, proposes to use, as the base particles, silicon particles, particles having a composite structure in which fine silicon particles are dispersed in a silicon-based compound, silicon oxide particles represented by a general formula SiOₓ where 0.5 ≤ x ≤ 1.6, or mixtures thereof.

### [Citation List]

### [Patent Literature]

Patent Literature 1: Japanese Laid-Open Patent Publication No. 2016-91649

### [Summary of Invention]

### [Technical Problem]

Increasing the silicon content in the negative electrode is an effective way to achieve high capacity of nonaqueous electrolyte secondary batteries. When the silicon content is increased, however, the polarization of the negative electrode increases, and the negative electrode potential (closed-circuit potential) during charging may become lower than the potential of lithium metal. In this case, the end-of-charge voltage is reached earlier than assumed, and the potential of the positive electrode fails to rise sufficiently, resulting in a lower capacity utilization rate.

### [Solution to Problem]

One aspect of the present invention relates to a negative electrode for a nonaqueous electrolyte secondary battery. The negative electrode has a negative electrode mixture layer containing a negative electrode active material, the negative electrode active material includes a first material containing silicon and a second material having a reaction potential with Li higher than silicon, and a content Cs of the silicon in the negative electrode mixture layer is 10 mass% or more.

Another aspect of the present invention relates to a nonaqueous electrolyte secondary battery, including: a positive electrode; the above-described negative electrode; a separator disposed between the positive electrode and the negative electrode; and a nonaqueous electrolyte.

### [Advantageous Effects of Invention]

According to the present disclosure, the decrease in the closed-circuit potential of the negative electrode is suppressed, and it is therefore possible to make less likely to occur the phenomenon in which the end-of-charge voltage is reached earlier than assumed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A longitudinal cross-sectional view of a nonaqueous electrolyte secondary battery according to an embodiment of the present disclosure.
[FIG. 2A] A diagram showing a charging curve of a battery of Reference Example R1 including a negative electrode not containing a second material.
[FIG. 2B] A diagram showing a charging curve of a battery of Reference Example R2 in which the negative electrode of R1 was replaced with lithium metal.
[FIG. 3A] A diagram showing a polarization behavior of graphite.
[FIG. 3B] A diagram showing a polarization behavior of a first material containing silicon.
[FIG. 3C] A diagram showing a polarization behavior of a first material containing silicon.
[FIG. 3D] A diagram showing a polarization behavior of a first material containing silicon.
[FIG. 3E] A diagram showing a polarization behavior of a first material containing silicon.
[FIG. 3F] A diagram showing a polarization behavior of a first material containing silicon.
[FIG. 4] A diagram showing a charging curve of a negative electrode containing a first material and a second material.
[FIG. 5] An enlarged view of the curve in FIG. 4 in the late stage of charging.
[FIG. 6] A diagram showing the relationship between the SOC of test cells and the content of the second material in the negative electrode mixture layer when the closed-circuit potential of the negative electrode reaches the potential of lithium metal.

### [Description of Embodiments]

Embodiments of the present disclosure will be described below by way of examples, but the present disclosure is not limited to the examples described below. In the following description, specific numerical values, materials, etc. are exemplified in some cases, but other numerical values, materials, etc. may be adopted as long as the effects of the present disclosure can be obtained. For the components other than those characteristic of the present disclosure, any known components for nonaqueous electrolyte secondary batteries and negative electrode used therefor may be adopted. In the present specification, when referring to "a range of a numerical value A to a numerical value B," the range includes the numerical value A and the numerical value B. When a plurality of materials are mentioned as examples, one kind of them may be selected and used singly, or two or more kinds of them may be used in combination. The present disclosure encompasses a combination of matters recited in any two or more claims selected from plural claims in the appended claims. In other words, as long as no technical contradiction arises, matters recited in any two or more claims selected from plural claims in the appended claims can be combined.

In the following, description will be given below mainly of a lithium-ion secondary battery as an example of a nonaqueous electrolyte secondary battery. The nonaqueous electrolyte secondary battery according to the present invention broadly encompasses secondary batteries having a liquid, gel or solid nonaqueous electrolyte, as long as it does not contradict the spirit of the invention. For example, the present invention can also be applied to all-solid-state secondary batteries.

A nonaqueous electrolyte secondary battery generally includes an electrode group, a nonaqueous electrolyte, and a battery case housing the electrode group and the nonaqueous electrolyte. The electrode group includes a positive electrode, a negative electrode, and a separator interposed between the positive electrode and the negative electrode.

The negative electrode according to the present embodiment has a negative electrode mixture layer containing a negative electrode active material. The negative electrode mixture layer is disposed, for example, on a surface of a sheet-like negative electrode current collector. The negative electrode mixture layer is composed of a negative electrode mixture containing a negative electrode active material as a major component, and therefore can be rephrased as a negative electrode active material layer. The negative electrode mixture is a mixture mainly composed of a negative electrode active material, which may further contain a binder, a conductive agent, and the like as optional components.

The negative electrode active material includes, at least, a first material and a second material. The first material and the second material are both reactive materials that exhibit capacity through the Faraday reaction. That is, the first material and the second material are reactive materials that absorb and release (or insert and desorb) lithium ions thereinto and therefrom, along with battery reactions. It is not necessary, however, that the whole of the first material is a reactive material, and it suffices when at least part of the first material is composed of a reactive material. Also, it is not necessary that the whole of the second material is a reactive material, and it suffices when at least part of the second material is composed of a reactive material. Here, the first material includes silicon that reacts with Li to form an alloy therewith. The surface of the silicon may be oxidized, and, for example, may have a natural oxide film. The second material includes a reactive material having a reaction potential with Li higher than silicon.

When the first material is compared with the second material, the reaction potential with Li of the second material is higher than that of the first material. By mixing the first material and the second material in the negative electrode mixture layer, the negative electrode potential becomes a mixed potential affected at least by the potential of the first material and the potential of the second material. Such a mixed potential is higher than the potential of the first material. As a result, even when the content of the first material (that is, the content of silicon) in the negative electrode mixture layer is considerably increased, the negative electrode potential hardly reaches the potential of lithium metal during charging. Therefore, the positive electrode potential when the battery voltage reaches the end-of-charge voltage can be raised sufficiently, and the capacity utilization rate is improved.

The phenomenon in which the negative electrode potential drops excessively low in the early stage and reaches the end-of-charge voltage earlier than assumed becomes apparent when the content of the first material in the negative electrode mixture layer is considerably increased. Specifically, such a phenomenon becomes apparent when a content Cs of the silicon in the negative electrode mixture layer is 10 mass% or more. Conventionally, in the batteries in practical use, the phenomenon as above has not become apparent because of the small content Cs of the silicon in the negative electrode mixture layer.

On the other hand, in order to achieve further higher capacity of a nonaqueous electrolyte secondary battery, it is effective to set the content Cs of the silicon in the negative electrode mixture layer to 10 mass% or more, desirably to 12 mass% or more, even to 20 mass% or more. It has been found that, in that case, raising the average potential of the negative electrode by using the second material is an effective way to raise the positive electrode potential at the time when the battery voltage reaches the end-of-charge voltage.

The end-of-charge voltage corresponds to the voltage (closed-circuit voltage) of a battery in a fully charged state. On the other hand, the end-of-discharge voltage corresponds to the voltage (closed-circuit voltage) of a battery in a fully discharged state. The quantity of charged electricity when a battery in a fully discharged state, which is a depth of discharge (DOD) 100%, is charged to a fully charged state (DOD = 0%), which is a state of charge (SOC: depth of charge) 100%, corresponds to the rated capacity. The charging and discharging of the nonaqueous electrolyte secondary battery is controlled by a predetermined control circuit. Such a control circuit is controlled so as to stop charging when a preset end-of-charge voltage (e.g., 4.2 V) is reached. The greater the polarization of the negative electrode is, the more likely the battery voltage tends to rise, and the more likely the end-of-charge voltage tends to be reached in the early stage before a sufficient quantity of electricity is stored. According to the present disclosure, the occurrence of such a phenomenon can be suppressed.

The second material contains no silicon that contributes to charging and discharging, and does not make so much contribution to achieving high capacity of the negative electrode as the first material containing silicon (or silicon phases). Therefore, it is desirable to use the second material in such an amount that does not impair the effect of increasing the capacity by the first material. In view of enhancing the effect of increasing the capacity, it is desirable that a content C1 of the first material in the negative electrode mixture layer is higher than a content C2 of the second material in the negative electrode mixture layer. Specifically, the content C2 may be 0.5 times or less as high as the content C1 (C2/C1 ≤ 0.5).

The content Cs of the silicon in the negative electrode mixture layer may be set higher than the content C2. Specifically, the content Cs may be 1.5 times or more as high as the content C2 (Cs/C2 ≥ 1.5), and may be twice or more as high as the content C2 (Cs/C2 ≥ 2). The higher the content Cs of the silicon phases is, the more advantageous it is for achieving high capacity. On the other hand, in view of suppressing the polarization of the negative electrode and suppressing the deterioration of the negative electrode due to the expansion and contraction of the silicon phases, the content Cs of the silicon may be restricted to 30 mass% or less.

The content C2 of the second material in the negative electrode mixture layer is not particularly limited. As long as the second material is contained even in a small amount in the negative electrode mixture layer, a mixed potential is formed accordingly, so that the effect of suppressing the decrease in the negative electrode battery during charging can be obtained. On the other hand, the higher the content C2 is, the greater the effect of suppressing the decrease in the negative electrode potential during charging is. In view of obtaining a more significant effect, the content C2 is desirably 0.5 mass% or more, may be 3 mass% or more, and may be 5 mass% or more, or 10 mass% or more. On the other hand, since the second material does not make so much contribution to achieving high capacity of the negative electrode as the first material, the content C2 may be, for example, 15 mass% or less, may be 10 mass% or less.

The first material contains silicon, and may be substantially composed only of silicon (or silicon phases), and may be composite particles each containing a material other than silicon. The first material may be used singly or in combination of two or more kinds.

The first material may be composite particle each containing silicon phases and a matrix phase in which the silicon phases are dispersed. The matrix phase is composed of a material having lithium ion conductivity. The matrix phase may include at least one selected from the group consisting of a silicon oxide phase and a carbon phase.

The silicon oxide phase contains Si and O, and may further contain a third element other than Si and O. The silicon oxide phase may be composed of SiO₂, lithium silicate, or both of them.

The composite particles as the first material (composite particles each containing silicon phases and a matrix phase in which the silicon phases are dispersed) may be, for example, in any of the following forms (a) to (c).

(a) First composite particles each containing silicon phases and a silicon dioxide (SiO₂) phase in which the silicon phases are dispersed.
(b) Second composite particles each containing silicon phases and a lithium silicate phase in which the silicon phases are dispersed.
(c) Third composite particles each containing silicon phases and a carbon phase in which the silicon phases are dispersed.

All of the first, second and third composite particles may each contain silicon phases dispersed in a matrix phase and a second material dispersed in the matrix phase. That is, the first material and the second material may be formed into a composite, forming one of the above composite particles. In this case, the first material is composed only of silicon phases, and the whole of the first material can be regarded as a reactive material (silicon phases).

The negative electrode mixture layer may be, for example, in any of the following forms (A) to (C).

(A) A negative electrode mixture layer containing a mixture of particles of the first material and particles of the second material.
(B) A negative electrode mixture layer containing composite particles in which the first material and the second material are formed into a particulate composite (e.g., the first, second, and third composite particles as described above).
(C) A negative electrode mixture layer containing a mixture of composite particles in which the first material and the second material are formed into a particulate composite (e.g., the first, second, and third composite particles as described above), and particles of a third material (e.g., carbonaceous particles, such as graphite, non-graphitizable carbon, and graphitizable carbon) other than such composite particles.

The first composite particles (containing a silicon dioxide (SiO₂) phase and silicon phases dispersed in the silicon dioxide (SiO₂) phase) are superior in that the stability is high and the changes in volume are small among the first materials. The high stability is considered to be attributed to a small particle diameter of the silicon phases (or silicon particles) dispersed in the silicon oxide phase, due to which deep charging is unlikely to proceed. The silicon oxide phase includes relatively many sites that irreversibly trap lithium ions and tends to have a large irreversible capacity among the first materials, but in return, is highly structurally stable, and undergoes less changes in volume.

The first composite particles can be synthesized by, for example, heating a raw material silicon dioxide in a non-oxidizing atmosphere, to allow a disproportionation reaction to proceed. In the disproportionation reaction, silicon fine particles can be uniformly produced in the silicon oxide phase. The average particle diameter of the silicon fine particles produced by the disproportionation reaction is, for example, less than 100 nm, and can be 5 nm to 50 nm. The matrix phase of the first composite particles can be composed of, for example, 95 to 100 mass% silicon dioxide. The overall composition of the first composite particles can be represented by a general formula SiOₓ where 0 < x < 2.

The content of the silicon phases in the first composite particles may be, for example, 20 mass% to 60 mass%.

The second composite particles (containing a lithium silicate phase and silicon phases dispersed in the lithium silicate phase) are superior in that the irreversible capacity is small among the first materials. With the second composite particles, excellent charge-discharge efficiency can be obtained. The effect is noticeable especially in the early stage of charging and discharging.

In addition to Li, Si, and O, the lithium silicate phase may contain, as a third element, at least one element selected from the group consisting of Group 1 elements (except Li) and Group 2 elements in the long-form periodic table. The Group 1 elements and the Group 2 elements can be, for example, K, Na, Mg, Ca, Sr, Ba, and the like. The lithium silicate phase may further contain Al, B, La, P, Zr, Ti, Fe, Cr, Ni, Mn, Cu, Mo, Zn, and the like.

The ratio O/Si of the number of O atoms to the number of Si atoms in the lithium silicate phase is, for example, greater than 2 and less than 4. In this case, it is advantageous in terms of the stability and the lithium-ion conductivity. The O/Si ratio may be greater than 2 and less than 3. The ratio Li/Si of the number of Li atoms to the number of Si atoms in the lithium silicate phase is, for example, greater than 0 and less than 4.

The composition of the lithium silicate can be represented by a general formula Li_{2z}SiO_{2+z} where 0 < z < 2. In view of the stability, the ease of fabrication, and the lithium-ion conductivity of the lithium silicate, z preferably satisfies 0 < z < 1, more preferably z = 1/2.

The second composite particles can be obtained by, for example, mixing lithium silicate with raw silicon, and crushing and stirring the mixture with a stirrer, such as a ball mill, and then baking the mixture in an inert atmosphere. The mixture may be sintered, and the sintered body may be pulverized, into the second composite particles.

The content of the silicon phases in the second composite particles can be, for example, 35 mass% or more and 80 mass% or less. The second composite particles, in which the content of the silicon phases can be changed as desired, allows for an easy designing of a high-capacity negative electrode.

The third composite particles (containing a carbon phase and silicon phases dispersed in the carbon phase) are superior in that the irreversible capacity is small among the first materials. In addition, the carbon phase can exhibit capacity through the Faraday reaction with lithium ions, and is therefore advantageous, among the first materials, in achieving high capacity.

The carbon phase may contain crystalline carbon (graphite), and may contain shapeless carbon with low crystallinity (i.e., amorphous carbon). The amorphous carbon may be a graphitizable carbon, a non-graphitizable carbon, or others.

The third composite particle can be obtained, for example, by mixing a carbon source with raw silicon, and crushing and stirring the mixture with a stirrer such as a ball mill, and then baking the mixture in an inert atmosphere. The mixture may be sintered, and the sintered body may be pulverized, into the third composite particles.

The carbon source that can be used include, for example, saccharides, water-soluble resins, and the like. For example, as the carbon source, carboxymethyl cellulose (CMC), polyvinylpyrrolidone, cellulose, sucrose, and the like may be used. In mixing the carbon source with the raw silicon, for example, the carbon source and the raw silicon may be dispersed in a dispersion medium, such as an alcohol.

The content of the silicon phases in the third composite particles may be, for example, 40 mass% or more and 80 mass% or less. The third composite particle, in which the content of the silicon phases can be changed as desired, allows for an easy designing of a high-capacity negative electrode.

The average particle diameter of the silicon phases (or silicon particles) in the second composite particle or the third composite particle is, for example, 100 nm or more and 500 nm or less, and may be 400 nm or less, or 200 nm or less. When the silicon phases have such a large average particle diameter, it is easy to increase the capacity of these composite particles.

The silicon phases dispersed in the matrix phase of the second composite particles or the third composite particles can be constituted of a plurality of crystallites. The crystallite size may be, for example, 30 nm or less, and may be 25 nm or less. In this case, the stress due to the changes in volume of the silicon phases during charging and discharging can be easily relaxed. The crystallite size is not particularly limited, and may be, for example, 5 µm or more, and may be 10 nm or more. The crystallite size of the silicon phases is calculated using the Scherrer's equation from the half-value width of the diffraction peak attributed to the Si (111) plane of an X-ray diffraction (XRD) pattern of the silicon phase.

The average particle diameters of the first, second, and third composite materials may be, for example, 2 µm to 10 µm, and may be 4 µm to 7 µm. In this case, the stress caused by changes in volume of the silicon phases during charging and discharging can be easily relaxed. The average particle diameter means a particle diameter at 50% cumulative volume (volume average particle diameter) in a particle size distribution measured by, for example, a laser diffraction and scattering method. As the measuring instrument, for example, "LA-750" manufactured by Horiba, Ltd. (HORIBA) can be used.

The contents of the silicon phases in the first, second and third composite materials can be measured by, for example, Si-NMR.

The average particle diameters of the silicon phases in the first, second and third composite materials can be measured from a cross-sectional SEM (scanning electron microscope) photograph of the composite particles. Specifically, the average particle diameter of the silicon phases can be determined by averaging the maximum diameters of randomly selected 100 silicon particles.

The second material includes a reactive material having a higher reaction potential with Li than silicon. In view of effectively increasing the mixed potential of the negative electrode during charging, it is desirable that the reaction potential with Li of the second material is 0.5 V or more higher than the potential of lithium metal. Such a second material is usually a material other than carbonaceous materials, and is desirably, for example, a metal compound. The second material may be used singly or in combination of two or more kinds.

The metal compound that can be used as the second material may have a crystal structure, for example, a spinel structure, a perovskite structure, or a layered rock-salt type structure. Specifically, a lithium-titanium composite oxide or a lithium-manganese composite oxide having a spinel structure, a lithium-containing transition metal oxide having a layered rock-salt type structure that is known as a positive electrode active material for lithium-ion secondary batteries, and the like may be used. In particular, the lithium-titanium composite oxide is preferable in that the reaction potential with Li is about 1.5 V to 1.6 V versus the potential of lithium metal, and excellent performance can be exhibited as a negative electrode active material for nonaqueous electrolyte secondary batteries.

The lithium-titanium composite oxide having a spinel-type crystal structure is represented by, for example, a general formula Li_{4+z}Ti₅O₁₂ where 0 ≤ z ≤ 1. The lithium-titanium composite oxide is superior also in that the lithium-ion acceptability is high and in that the resistance against ion diffusion at the negative electrode can be easily reduced. The most typical material is Li₄Ti₅O₁₂.

The lithium-titanium composite oxide represented by a general formula: LiᵥTi_{5-w}M_{w}O₁₂₊ₜ where 3 ≤ v ≤ 5, 0.005 ≤ w ≤ 1.5, -1 ≤ t ≤ 1 may also be used. M is, for example, at least one selected from the group consisting of V, Mn, Fe, Co, Ni, Cu, Zn, Al, B, Mg, Ca, Sr, Ba, Zr, Nb, Mo, W, Bi, Na, K, and rare earth elements.

The average particle diameter of the lithium-titanium composite oxide is, for example, 20 µm or less, and may be 10 µm or less, in view of ensuring the dispersibility in the negative electrode mixture layer and forming a uniform mixed potential. The average particle diameter of the lithium-titanium composite oxide may be, for example, 0.4 µm or more, and may be 0.6 µm or more. Herein also, the average particle diameter means an average particle diameter at 50% cumulative volume in a particle size distribution measured by, for example, a laser diffraction and scattering method.

The negative electrode active material may further contain carbonaceous particles, in addition to the first material and the second material. With the carbonaceous particles, whose degree of expansion and contraction during charging and discharging is small as compare to the first material, the cycle characteristics can be easily improved. Moreover, the carbonaceous particles, whose reaction potential with Li is small as compared to the second material, are advantageous for achieving high capacity.

The content of the carbonaceous particles (excluding the carbon phase as the matrix phase of the first material) in the negative electrode active material may be, for example, 70 mass% to 90 mass%. In this case, high capacity and cycle characteristics are both likely to be achieved.

Examples of the carbonaceous particles include graphite, graphitizable carbon (soft carbon), and non-graphitizable carbon (hard carbon). In particular, graphite is preferred in terms of its excellent stability during charging and discharging and small irreversible capacity. Graphite means a material having a graphite-like crystal structure, examples of which include natural graphite, artificial graphite, and graphitized mesophase carbon particles. The carbon material may be used singly or in combination of two or more kinds.

Next, a general description will be given below of a lithium-ion secondary battery as an example of a nonaqueous electrolyte secondary battery according to an embodiment of the present disclosure. The lithium-ion secondary battery includes, for example, a negative electrode, a positive electrode, and a nonaqueous electrolyte as described below.

### [Negative electrode]

The negative electrode includes a negative electrode current collector, and a negative electrode mixture layer. The negative electrode mixture layer is formed by, for example, applying a negative electrode slurry in which a negative electrode mixture containing a negative electrode active material is dispersed in a dispersion medium, onto a surface of the negative electrode current collector, and rolling the dry applied film. The negative electrode mixture layer may be formed on one side or both sides of the negative electrode current collector.

The negative electrode mixture contains a negative electrode active material as an essential component, and contains a binder, a conductive agent, a thickener, and the like as optional components.

The negative electrode current collector is in a sheet form, and may be a metal foil, a mesh, a net, a punched sheet, and the like. Examples of the material of the negative electrode current collector include stainless steel, nickel, nickel alloy, copper, and copper alloy. The thickness of the negative electrode current collector is, although not limited to, for example, 1 µm to 50 µm, and may be 5 µm to 20 µm.

As the binder, a resin material is used. Examples thereof include a fluorocarbon resin, a polyolefin resin, a polyamide resin, a polyimide resin, an acrylic resin, a vinyl resin, and a rubbery material.

Examples of the conductive agent include carbon black and carbon nanotubes.

Examples of the thickener include carboxymethyl cellulose (CMC), modified products of CMC (Na salts, etc.), cellulose derivatives, polyvinyl alcohol, and polyether.

Examples of the dispersion medium include water, an alcohol, an ether, and N-methyl-2-pyrrolidone (NMP).

### [Positive electrode]

The positive electrode includes a positive electrode active material capable of electrochemically absorbing and releasing lithium ions. The positive electrode includes, for example, a positive electrode collector, and a positive electrode mixture layer. The positive electrode mixture layer is formed by, for example, applying a positive electrode slurry in which a positive electrode mixture containing a positive electrode active material is dispersed in a dispersion medium, onto a surface of a positive electrode current collector, and rolling the dry applied film. The positive electrode mixture layer may be formed on one side or both sides of the positive electrode current collector.

The positive electrode mixture contains a positive electrode active material as an essential component, and a binder, a conductive agent, and the like as optional components.

As the positive electrode active material, for example, a lithium-containing transition metal oxide can be used. Examples thereof include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMPO₄, and Li₂MPO₄F, where M is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. The value of a which represents the molar ratio of lithium increases or decreases during charging and discharging.

In particular, preferred is a lithium-nickel composite oxide represented by LiₐNi_{b}M_{1-b}O₂ where M is at least one selected from the group consisting of Mn, Co, and Al, 0 < a ≤ 1.2, and 0.3 ≤ b ≤ 1. In view of achieving high capacity, more preferably, 0.80 ≤ b ≤ 1. In view of the stability of the crystal structure, more preferred is LiₐNi_{b}Co_{c}Al_{d}O₂ containing Co and Al as elements represented by M where 0 < a ≤ 1.2, 0.80 ≤ b < 1, 0 < c < 0.20, 0 < d ≤ 0.1, and b+c+d = 1.

As the binder and the conductive agent, for example, any of the materials exemplified for the negative electrode can be used. As the conductive agent, graphite, such as natural graphite and artificial graphite, may be used.

The positive electrode current collector is in a sheet form, and may be a metal foil, a mesh, a net, a punched sheet, and the like. Examples of the material of the positive electrode current collector include stainless steel, aluminum, aluminum alloy, and titanium. The thickness of the positive electrode current collector is, although not limited to, for example, 1 µm to 50 µm, and may be, for example, 5 µm to 20 µm.

### [Nonaqueous electrolyte]

The nonaqueous electrolyte may be a liquid electrolyte (electrolyte solution), may be a gel electrolyte, and may be a solid electrolyte. The gel electrolyte contains a lithium salt and a matrix polymer, or contains a lithium salt, a nonaqueous solvent, and a matrix polymer. The matrix polymer may be, for example, a polymer material that absorbs a nonaqueous solvent and turns into a gel. Examples of the polymer material include a fluorocarbon resin, an acrylic resin, a polyether resin, and polyethylene oxide. The solid electrolyte may be an inorganic solid electrolyte. As the inorganic solid electrolyte, for example, a known material for use in all-solid lithium-ion secondary batteries and the like (e.g., oxide-based solid electrolyte, sulfide-based solid electrolyte, halide-based solid electrolyte, etc.) is used.

The liquid electrolyte (electrolytic solution) includes, for example, a nonaqueous solvent, and an electrolyte salt. The electrolyte salt includes at least a lithium salt. The lithium salt concentration in the nonaqueous electrolyte is preferably, for example, 0.5 mol/L or more and 2 mol/L or less.

As the nonaqueous solvent, for example, a cyclic carbonic acid ester, a chain carbonic acid ester, a cyclic carboxylic acid ester, a chain carboxylic acid ester, and the like are used.

Examples of the lithium salt include LiClO₄, LiBF₄, LiPF₆, LiAlCl₄, LiSbF₆, LiSCN, LiCF₃SO₃, LiCF₃CO₂, LiAsF₆, and imide salts. As the imide salt, lithium bisfluorosulfonyl imide (LiN(FSO₂)₂), lithium bistrifluoromethanesulfonyl imide (LiN(CF₃SO₂)₂), and the like are exemplified.

### [Separator]

A separator may be interposed between the positive electrode and the negative electrode. The separator is excellent in ion permeability and has moderate mechanical strength and electrically insulating properties. As the separator, a microporous thin film, a woven fabric, a nonwoven fabric, and the like can be used. The material of the separator includes, for example, polyolefin, such as polypropylene and polyethylene.

### [Lithium-ion secondary battery]

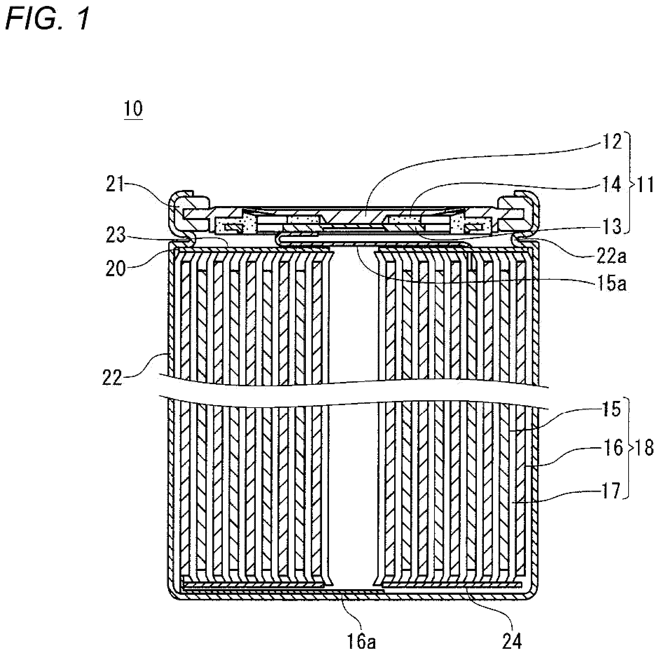

The lithium-ion secondary battery may be in any form, and has a form of, for example, cylindrical, prismatic, coin, button, or laminate shape. The structure of a cylindrical lithium-ion secondary battery (secondary battery 10) will be described below with reference to FIG. 1.

The battery 10 includes an electrode group 18, an electrolyte (not shown), and a bottomed cylindrical battery can 22 housing them. A sealing assembly 11 is crimped onto the opening of the battery can 22, with a gasket 21 interposed therebetween. This seals the inside of the battery 10. The sealing assembly 11 includes a valve body 12, a metal plate 13, and an annular insulating member 14 interposed between the valve body 12 and the metal plate 13. The valve body 12 and the metal plate 13 are connected to each other at their respective centers. A positive electrode lead 15a led out from a positive electrode 15 is connected to the metal plate 13. Thus, the valve body 12 functions as an external terminal of the positive electrode. A negative electrode lead 16a led out from a negative electrode 16 is connected to the bottom inner surface of the battery can 22. An annular groove 22a is formed in the vicinity of the open end of the battery can 22. A first insulating plate 23 is disposed between one end face of the electrode group 18 and the annular groove 22a. A second insulating plate 24 is disposed between the other end face of the electrode group 18 and the bottom of the battery can 22. The electrode group 18 is formed by winding the belt-like positive electrode 15 and the belt-like negative electrode 16 with a separator 17 interposed therebetween.

In the following, the present disclosure will be specifically described with reference to Examples and Comparative Examples. The present disclosure, however, is not limited to the following Examples.

### <<Reference Example R1>>

As the first material, second composite particles (average particle diameter 8 µm, silicon content 55 mass%) and third composite particles (average particle diameter 7 µm, silicon content 58 mass%) were prepared.

### (Second composite particles)

The second composite particles contain a lithium silicate phase represented by Li₂Si₂O₅ where z = 0.5 and silicon phases dispersed in the lithium silicate phase. The second composite particles were mixed with coal pitch, and the mixture was baked at 800 °C in an inert atmosphere, to coat the surfaces of the second composite particles with conductive carbon. The average particle diameter was controlled by the conditions of the subsequent pulverization. The thickness of the conductive layer was estimated to be approximately 100 nm. The average particle diameter of the silicon phases was approximately 100 nm, and the crystallite size of the silicon phases was 15 nm.

### (Third composite particles)

The third composite material contains an amorphous carbon phase and silicon phases dispersed in the amorphous carbon phase. The average particle diameter of the silicon phases was about 200 nm, and the crystallite size was 15 nm.

### <Negative electrode active material>

The second composite particles, the third composite particles, and graphite were mixed in a mass ratio of 3:32:65, to prepare a negative electrode active material.

### [Production of the negative electrode]

A negative electrode mixture containing the negative electrode active material, a Na salt of CMC, and styrene butadiene rubber (SBR) in a mass ratio of 97.5:1:1.5 was dispersed in water serving as a dispersion medium, and stirred using a mixer, to prepare a negative electrode slurry. The silicon content Cs in the negative electrode mixture (i.e., a negative electrode mixture layer to be formed later) was 19.7 mass%, and the content C1 of the first material (the total amount of the first composite particles and the second composite particles) was 34.1 mass%. The negative electrode slurry was applied onto both sides of a copper foil, and the applied film was dried and then rolled, to form a negative electrode mixture layer on each of both sides of the copper foil. A negative electrode was thus obtained.

### [Production of positive electrode]

A lithium-nickel composite oxide (LiNi_{0.8}Co_{0.18}Al_{0.02}O₂), acetylene black, and polyvinylidene fluoride were mixed in a mass ratio of 95:2.5:2.5, and the mixture was dispersed in NMP, and stirred using a mixer, to prepare a positive electrode slurry. The positive electrode slurry was applied onto both sides of an aluminum foil, and the applied film was dried and then rolled, to form a positive electrode mixture layer on each of both sides of the aluminum foil. A positive electrode was thus obtained.

### [Preparation of nonaqueous electrolyte]

A nonaqueous electrolyte was prepared by dissolving a lithium salt in a nonaqueous solvent. The nonaqueous solvent used here was a 30:70 (volume ratio) mixed solvent of ethylene carbonate (EC) and dimethyl carbonate (DMC). The lithium salt used here was LiPF₆. The LiPF₆ concentration was set to 1.1 mol/L.

### [Fabrication of lithium-ion secondary battery]

With a tab attached to each electrode, the positive electrode and the negative electrode were wound spirally with the separator interposed therebetween such that the tab was positioned at the outermost layer, thereby to form an electrode group. The electrode group was inserted into an outer body made of aluminum laminated film and vacuum-dried at 60 °C for 12 hours. Then, the nonaqueous electrolyte was injected, and the opening of the outer body was sealed. A battery R1 of Reference Example 1 was thus obtained.

The battery R1 of Reference Example R1 fabricated in the above was subjected to a predetermined preliminary charge-discharge twice, and then charged in the following procedure.

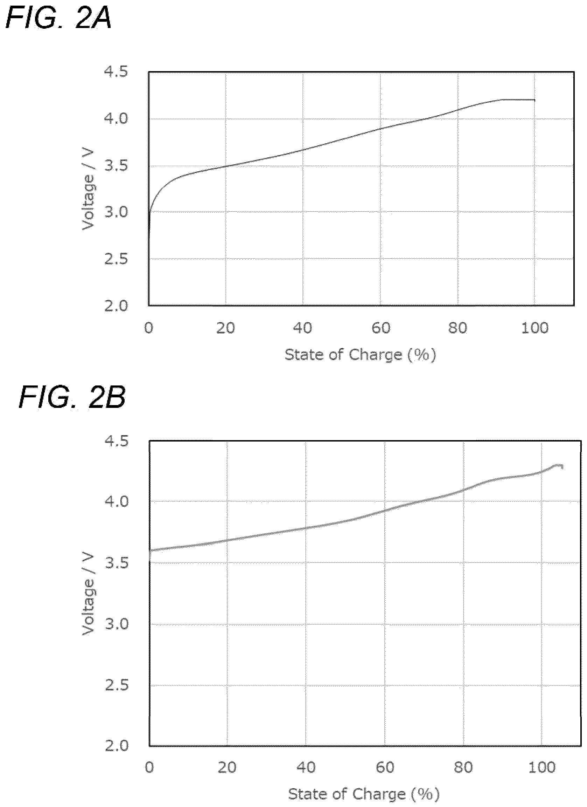

In an environmental temperature of 25 °C, the battery R1 was constant-current charged at a current of 0.1C until the battery voltage reached 4.2 V, and then constant-voltage charged at a constant voltage of 4.2 V until the current reached 0.02C. The charging curve at this time is shown in FIG. 2A.

### <<Reference Example R2>>

A battery R2 which was a positive electrode monopolar battery was obtained in the same manner as in Reference Example R1, except that the negative electrode was replaced with a lithium metal having a tab attached thereto.

The battery R2 of Reference Example R2 fabricated in the above was subjected to a predetermined preliminary charge-discharge twice, and thereafter, in an environmental temperature of 25 °C, was constant-current charged at a current of 0.1C until the battery voltage reached 4.3 V, and then constant-voltage charged at a constant voltage of 4.3 V until the current reached 0.02C. The charging curve at this time is shown in FIG. 2B.

In FIG. 2B, in the late stage of charging, a voltage rising behavior which corresponds to a structural change in the positive electrode active material is observed, whereas such a behavior is not observed in FIG. 2A. It can be understood from this that, in the late stage of charging, the battery voltage reached 4.2 V in an early stage, and the positive electrode potential failed to rise to an assumed level.

Note that when the rated capacity is denoted by C (Ah), C (Ah) / X (h) represents the current value when the quantity of electricity equivalent to the rated capacity is charged or discharged over X hours. For example, 0.1C means the current value when the battery is charged from DOD 100% to SOC 100% over X = 10 hours.

### <<Reference Example C1>>

### [Production of negative electrode]

Except for using graphite only as the negative electrode active material, in the same manner as in Reference Example R1, a negative electrode slurry was prepared, the negative electrode slurry was applied onto both sides of a copper foil, the applied film was dried and then rolled, to form a negative electrode mixture layer on each of both sides of the copper foil, and thus, a negative electrode was obtained.

The negative electrode was cut into a 20-mm by 20-mm shape having a 5-mm by 5-mm protruding portion, and the negative electrode mixture layer on the protruding portion was peeled off to expose the copper foil. Thereafter, a negative electrode tab lead was connected to the exposed portion of the negative electrode current collector, and a predetermined region in the outer periphery of the negative electrode tab lead was covered with an insulating film.

### [Preparation of counter electrode]

A tab with a small piece of Ni mesh welded at its end was prepared, and cut in a predetermined size, and the mesh portion was pressed against a 300-µm-thick lithium metal foil, to prepare a counter electrode.

### [Preparation of nonaqueous electrolyte]

LiPF₆ was dissolved in a mixed solvent of ethylene carbonate (EC), ethyl methyl carbonate (EMC), and dimethyl carbonate (DMC) in a volume ratio of EC:EMC:DMC = 4:1:15, to prepare as nonaqueous electrolyte. The LiPF₆ concentration was set to 1.3 mol/L.

### [Fabrication of cell]

A negative electrode-regulated cell was prepared using the above negative electrode and two counter electrodes. The negative electrode was sandwiched between a pair of counter electrodes, and the negative electrode mixture layers and the lithium metal foil were faced each other with a separator interposed therebetween, to obtain an electrode group. Next, an Al laminate film cut out in a rectangular shape was folded in half, and the ends of the long sides were heat-sealed, into a tubular shape. Thereafter, the obtained electrode group was inserted into the tube from one of the short sides, and with the end face of the Al laminate film aligned with the insulating films of the respective tab leads, the one side was heat-sealed. Next, 0.3 cm³ of the nonaqueous electrolyte was injected into the tube from the short side which was left not heat-sealed. After the electrolyte injection, an operation consisting of leaving to stand for 3 minutes under a reduced pressure of 0.02 MPa and then returning to atmospheric pressure was repeated twice, to impregnate the negative electrode mixture layer with the nonaqueous electrolyte. Lastly, the end face of the Al laminate film on the side from which the electrolyte had been injected was heat-sealed, to complete a cell C1 for evaluation. The fabrication of the cell was carried out in a dry air atmosphere with a dew point of -60 °C or less.

### [Evaluation]

In an environmental temperature of 25 °C, the cell was sandwiched between a pair of 10- by 5-cm stainless steel clamps and fixed under a pressure of 1 MPa. Then, at a constant current of 0.1C, the negative electrode was charged with lithium until the cell voltage reached 0.1 V, and then the charging was continued until an assumed capacity was reached. During the continuation of charging, the charging was interrupted as appropriate, and the open circuit voltage was measured after the rest for 3 hours.

### <<Reference Example E1>>

Except for mixing the second composite particles and graphite in a mass ratio of 20:80, to prepare a negative electrode active material, in the same manner as in Reference Example R1, a negative electrode slurry was prepared, the negative electrode slurry was applied onto both sides of a copper foil, the applied film was dried and then rolled, to form a negative electrode mixture layer on each of both sides of the copper foil, and thus, a negative electrode was obtained. Then, a test cell E1 was fabricated and evaluated in the same manner as in Reference Example C1.

### <<Reference Example E2>>

Except for mixing the third composite particles and graphite in a mass ratio of 20:80, to prepare a negative electrode active material, in the same manner as in Reference Example R1, a negative electrode slurry was prepared, the negative electrode slurry was applied onto both sides of a copper foil, the applied film was dried and then rolled, to form a negative electrode mixture layer on each of both sides of the copper foil, and thus, a negative electrode was obtained. Then, a test cell E2 was fabricated and evaluated in the same manner as in Reference Example C1.

### <<Reference Example E3>>

Except for mixing the second composite particles, the third composite particles, and graphite in a mass ratio of 5:25:70, to prepare a negative electrode active material, in the same manner as in Reference Example R1, a negative electrode slurry was prepared, the negative electrode slurry was applied onto both sides of a copper foil, the applied film was dried and then rolled, to form a negative electrode mixture layer on each of both sides of the copper foil, and thus, a negative electrode was obtained. Then, a test cell E3 was fabricated and evaluated in the same manner as in Reference Example C1.

### <<Reference Example E4>>

Except for mixing the second composite particles and graphite in a mass ratio of 30:70, to prepare a negative electrode active material, in the same manner as in Reference Example R1, a negative electrode slurry was prepared, the negative electrode slurry was applied onto both sides of a copper foil, the applied film was dried and then rolled, to form a negative electrode mixture layer on each of both sides of the copper foil, and thus, a negative electrode was obtained. Then, a test cell E4 was fabricated and evaluated in the same manner as in Reference Example C1.

### <<Reference Example E5>>

Except for mixing the third composite particles and graphite in a mass ratio of 30:70, to prepare a negative electrode active material, in the same manner as in Reference Example R1, a negative electrode slurry was prepared, the negative electrode slurry was applied onto both sides of a copper foil, the applied film was dried and then rolled, to form a negative electrode mixture layer on each of both sides of the copper foil, and thus, a negative electrode was obtained. Then, a test cell E5 was fabricated and evaluated in the same manner as in Reference Example C1.

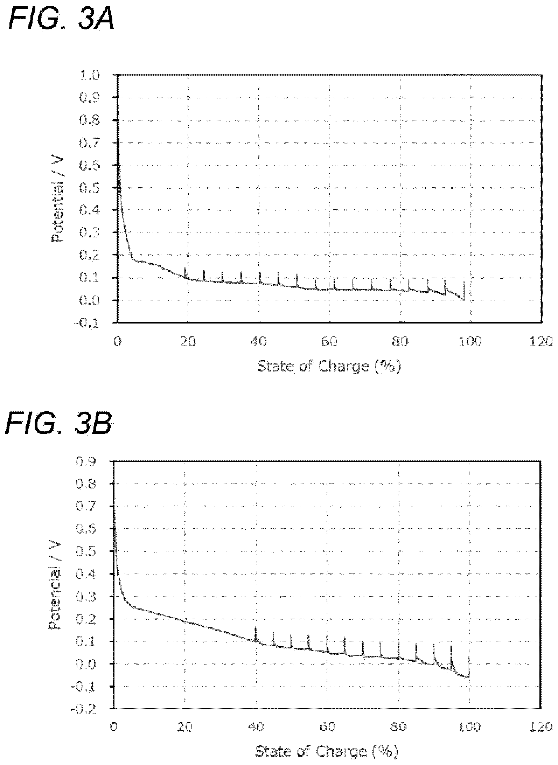

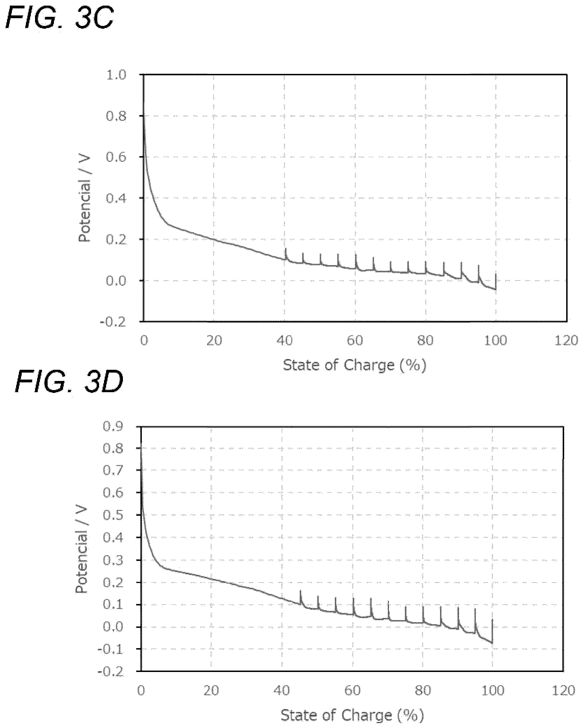

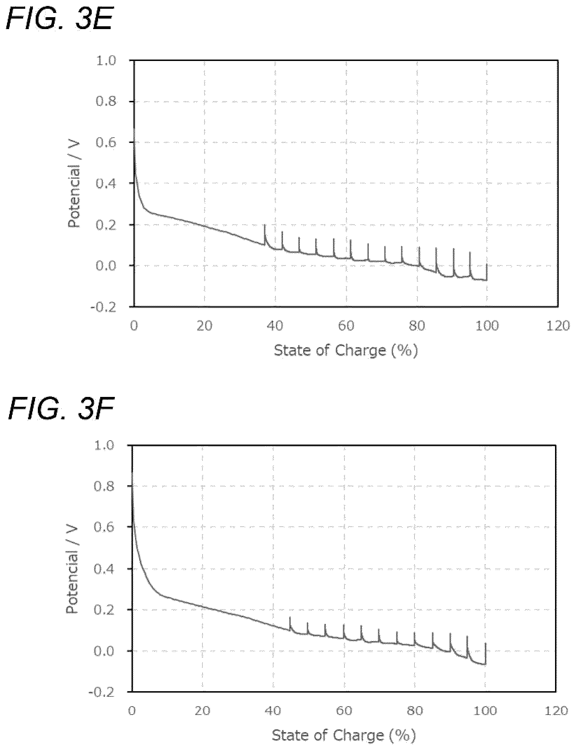

The charging curve of the cell C1 is shown in FIG. 3A, and those of E1 to E5 are shown in FIGS. 3B to 3F. It can be understood from FIGS. 3A to 3E that, in the cell C1 of Reference Example 2, the polarization of the negative electrode was small, and the negative electrode potential (closed-circuit potential) at full charge was higher than the potential of lithium metal. On the other hand, in the cells E1 to E5 of Reference Examples E1 to E5, the polarization of the negative electrode was large, and the negative electrode potential (closed-circuit potential) at full charge was lower than the potential of lithium metal.

### <<Example 1>>

Except for mixing the second composite particles, the third composite particles, graphite, and a second material (Li₄Ti₅O₁₂) in a mass ratio of 3:32:65:3, to prepare a negative electrode active material, in the same manner as in Reference Example R1, a negative electrode slurry was prepared, the negative electrode slurry was applied onto both sides of a copper foil, the applied film was dried and then rolled, to form a negative electrode mixture layer on each of both sides of the copper foil, and thus, a negative electrode was obtained.

The silicon content Cs in the negative electrode mixture (i.e., the negative electrode mixture layers) was 19.1 mass%, the content C1 of the first material (the total amount of the first composite particles and the second composite particles) was 33.1 mass%, and the content C2 of the second material was 3 mass%. Then, a test cell A1 was fabricated and evaluated in the same manner as in Reference Example C1.

### <<Example 2>>

Except for mixing the second composite particles, the third composite particles, graphite, and a second material (Li₄Ti₅O₁₂) in a mass ratio of 3:32:65:5, to prepare a negative electrode active material, in the same manner as in Reference Example R1, a negative electrode slurry was prepared, the negative electrode slurry was applied onto both sides of a copper foil, the applied film was dried and then rolled, to form a negative electrode mixture layer on each of both sides of the copper foil, and thus, a negative electrode was obtained.

The silicon content Cs in the negative electrode mixture (i.e., the negative electrode mixture layers) was 18.8 mass%, the content C1 of the first material (the total amount of the first composite particles and the second composite particles) was 32.5 mass%, and the content C2 of the second material was 5 mass%. Then, a test cell A2 was fabricated and evaluated in the same manner as in Reference Example C1.

### <<Example 3>>

Except for mixing the second composite particles, the third composite particles, graphite, and a second material (Li₄Ti₅O₁₂) in a mass ratio of 3:32:65:10, to prepare a negative electrode active material, in the same manner as in Reference Example R1, a negative electrode slurry was prepared, the negative electrode slurry was applied onto both sides of a copper foil, the applied film was dried and then rolled, to form a negative electrode mixture layer on each of both sides of the copper foil, and thus, a negative electrode was obtained.

The silicon content Cs in the negative electrode mixture (i.e., the negative electrode mixture layers) was 17.9 mass%, the content C1 of the first material (the total amount of the first composite particles and the second composite particles) was 31.0 mass%, and the content C2 of the second material was 10 mass%. Then, a test cell A3 was fabricated and evaluated in the same manner as in Reference Example C1.

### <<Example 4>>

Except for mixing the second composite particles, the third composite particles, graphite, and a second material (Li₄Ti₅O₁₂) in a mass ratio of 3:32:65:15, to prepare a negative electrode active material, in the same manner as in Reference Example R1, a negative electrode slurry was prepared, the negative electrode slurry was applied onto both sides of a copper foil, the applied film was dried and then rolled, to form a negative electrode mixture layer on each of both sides of the copper foil, and thus, a negative electrode was obtained.

The silicon content Cs in the negative electrode mixture (i.e., the negative electrode mixture layers) was 17.1 mass%, the content C1 of the first material (the total amount of the first composite particles and the second composite particles) was 29.7 mass%, and the content C2 of the second material was 15 mass%. Then, a test cell A4 was fabricated and evaluated in the same manner as in Reference Example C1.

### <<Comparative Example 1>>

Except for mixing the second composite particles, the third composite particles, and graphite in a mass ratio of 3:32:65, to prepare a negative electrode active material without using a second material (Li₄Ti₅O₁₂), in the same manner as in Reference Example R1, a negative electrode slurry was prepared, the negative electrode slurry was applied onto both sides of a copper foil, the applied film was dried and then rolled, to form a negative electrode mixture layer on each of both sides of the copper foil, and thus, a negative electrode was obtained.

The silicon content Cs in the negative electrode mixture (i.e., the negative electrode mixture layers) was 19.7 mass% by mass, the content C1 of the first material (the total amount of the first composite particles and the second composite particles) was 34.1 mass%, and the content C2 of the second material was 0 mass%. Then, a test cell A5 was fabricated and evaluated in the same manner as in Reference Example C1.

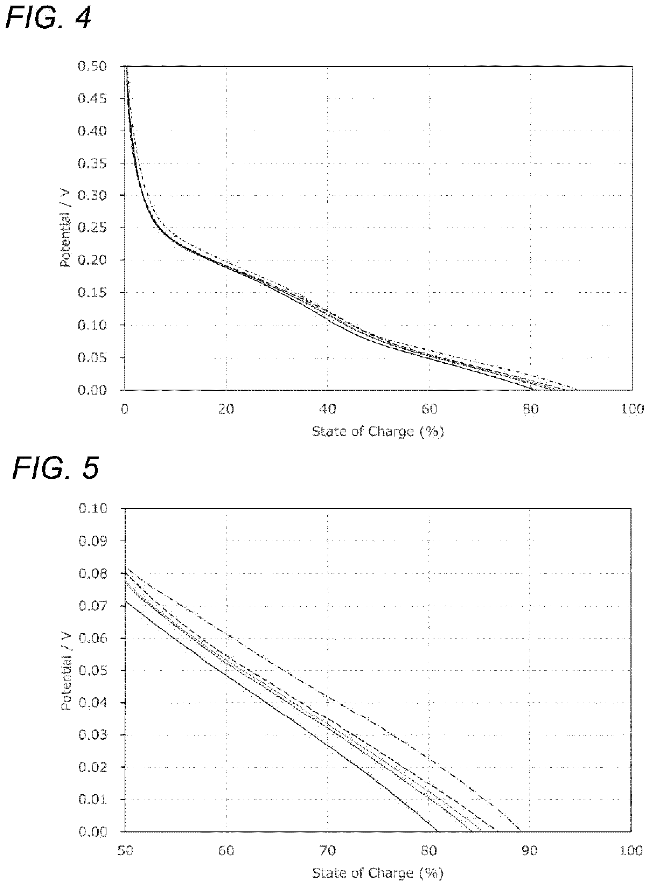

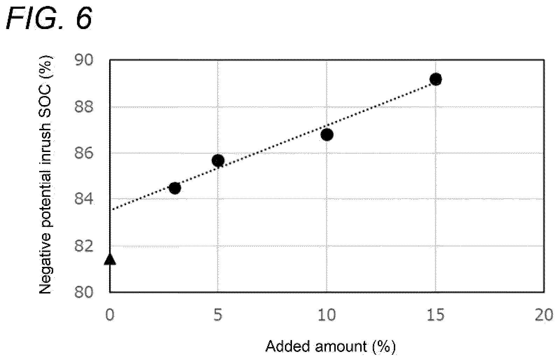

The charging curves of the cells A1 to A5 are shown in FIG. 4. In FIG. 4, the solid curve is a curve of the cell A5 including no second material, and a curve with a higher SOC in the late stage of charging was of a higher content of the second material. In other words, from the left side to the right side, curves belonging to the cells A1 to A4 are shown. In FIG. 5, an enlarged view of the curve in FIG. 4 in the late stage of charging is shown. In FIG. 6, the relationship between the SOC (negative potential inrush SOC (%)) of the test cells when the closed-circuit potential of the negative electrode reaches the potential of lithium metal and the content (added amount (%)) of the second material in the negative electrode mixture layer is shown.

According to FIG. 6, it can be understood that the SOC of the test cells when the closed-circuit potential of the negative electrode reaches the potential of lithium metal vary depending on the content C2 of the second material in the negative electrode mixture layer. Also, it can also be understood that the higher the content C2 is, the greater the effect of increasing the negative electrode potential in the late stage of charging becomes.

### [Industrial Applicability]

A nonaqueous electrolyte secondary battery including a negative electrode for a nonaqueous electrolyte secondary battery according to the present disclosure is suitably applicable as a main power source for mobile communication devices, portable electronic devices, a power source for in-vehicle use, and the like. The application, however, is not limited to these.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: secondary battery, 11: sealing assembly, 12: valve body, 13: metal plate, 14: insulating member, 15: positive electrode plate, 15a: positive electrode lead, 16: negative electrode plate, 16a: negative electrode lead, 17: separator, 18: electrode group, 21: gasket, 22: battery can, 22a: groove, 23: first insulating plate, 24: second insulating plate, 16: negative electrode, 161: negative electrode current collector, 162: negative electrode mixture layer

## Claims

1. A negative electrode for a nonaqueous electrolyte secondary battery,
the negative electrode having a negative electrode mixture layer containing a negative electrode active material,
the negative electrode active material including a first material containing silicon and a second material having a reaction potential with Li higher than silicon, and
a content Cs of the silicon in the negative electrode mixture layer being 10 mass% or more.

2. The negative electrode for a nonaqueous electrolyte secondary battery according to claim 1, wherein
a content C1 of the first material in the negative electrode mixture layer is higher than a content C2 of the second material in the negative electrode mixture layer.

3. The negative electrode for a nonaqueous electrolyte secondary battery according to claim 1, wherein
the content Cs of the silicon in the negative electrode mixture layer is higher than the content C2 of the second material in the negative electrode mixture layer.

4. The negative electrode for a nonaqueous electrolyte secondary battery according to any one of claims 1 to 3, wherein the content C2 of the second material in the negative electrode mixture layer is 0.5 mass% or more.

5. The negative electrode for a nonaqueous electrolyte secondary battery according to any one of claims 1 to 4, wherein the second material includes a lithium-titanium composite oxide.

6. The negative electrode for a nonaqueous electrolyte secondary battery according to any one of claims 1 to 5, wherein
the first material contains phases of the silicon and a matrix phase in which the phases of the silicon are dispersed, and
the matrix phase includes at least one selected from the group consisting of a silicon oxide phase and a carbon phase.

7. The negative electrode for a nonaqueous electrolyte secondary battery according to claim 6, wherein the silicon oxide phase includes lithium silicate.

8. The negative electrode for a nonaqueous electrolyte secondary battery according to claim 6 or 7, wherein the second material is further dispersed in the matrix phase in which the phases of the silicon are dispersed.

9. The negative electrode for a nonaqueous electrolyte secondary battery according to any one of claims 1 to 8, wherein the negative electrode active material further contains carbonaceous particles.

10. A nonaqueous electrolyte secondary battery, comprising: a positive electrode; the negative electrode of claim 1; a separator disposed between the positive electrode and the negative electrode; and a nonaqueous electrolyte.
